Europäisches Patentamt

European Patent Office

Office européen des brevets

(19)

(11) Numéro de publication: **0 174 218**

**A1**

(12)

# DEMANDE DE BREVET EUROPEEN

(21) Numéro de dépôt: **85401387.7**

(22) Date de dépôt: **09.07.85**

(51) Int. Cl.⁴: **G 11 B 15/29**

(30) Priorité: **08.08.84 FR 8412518**

(43) Date de publication de la demande:
**12.03.86 Bulletin 86/11**

(84) Etats contractants désignés:
**CH DE FR GB IT LI NL SE**

(71) Demandeur: **ENERTEC SOCIETE ANONYME**
**12, Place des Etats-Unis**
**F-92120 Montrouge(FR)**

(72) Inventeur: **Merle, Jean-Pierre**
**7, rue Cécile Dinant**
**F-92140 - Clamart(FR)**

(74) Mandataire: **Bentz, Jean-Paul**
**GIERS SCHLUMBERGER Service BREVETS 12, place des**
**Etats-Unis**
**F-92124 Montrouge Cedex(FR)**

(54) **Dispositief integre d'entrainement de bande magnétique.**

(57) Un dispositif d'entraînement de bande dans lequel un cabestan (21) et des galets presseurs (31) sont munis respectivement d'engrenages coaxiaux pour empêcher le cabestan et les galets de glisser l'un par rapport à l'autre. Les dents des engrenages ne s'engagent que partiellement. L'utilisation d'engrenages permet l'application d'une force réduite sur les galets presseurs, ce qui leur prolonge leur dureté de vie.

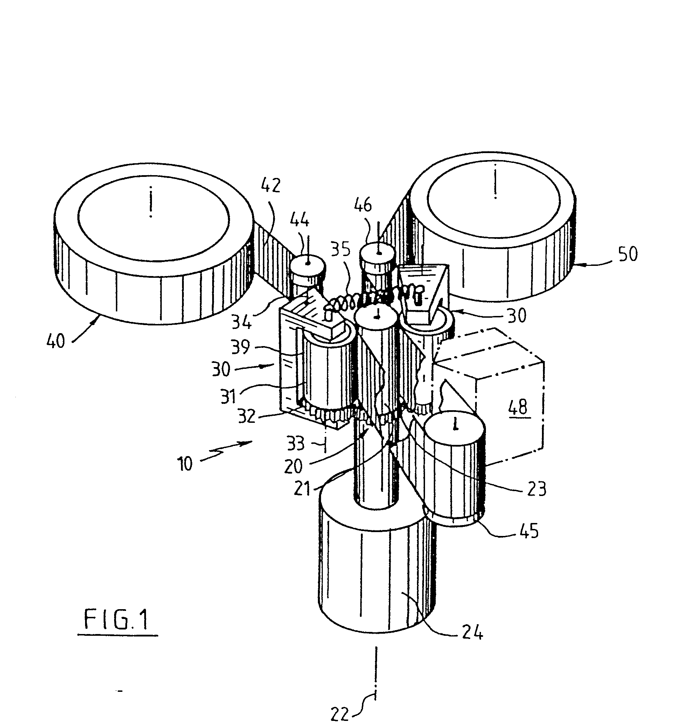

Cet abrégé est relatif á la fig. 1.

FIG.1

# DISPOSITIF INTEGRE D'ENTRAINEMENT DE BANDE MAGNETIQUE

La présente invention concerne des enregistreurs magnétiques et plus précisément, un système d'entraînement de bande magnétique sans glissement, notamment pour un enregistreur d'accident d'avion, du type comportant un cabestan entraîné par un moteur et un galet presseur appuyé contre le cabestan de façon à tourner avec le cabestan et à faire défiler une bande passant entre le cabestan et le galet. .

Les dispositifs d'entraînement de bande magnétique par cabestan sont bien connus. Un système d'entraînement à cabestan comporte divers galets tournants qui comprennent généralement un cabestan, entraîné par moteur, en contact avec la surface de la bande à entraîner, et un galet presseur monté sur un axe parallèle au cabestan et appuyé sur ce dernier par des ressorts. Le galet presseur appuie la bande contre le cabestan. L'avancement de la bande dépend du frottement statique entre la bande et la surface du cabestan. Tant que la bande, le cabestan, les galets et d'autres parties, sont propres et secs, ils offrent une faible résistance au mouvement et fonctionnent sans glissement. Le ressort qui sollicite le cabestan et le galet l'un vers l'autre assure un frottement suffisant pour que le cabestan entraîne la bande et que la bande entraîne le galet. En fonctionnement normal, ce frottement permet d'entraîner la bande en faisant tourner le ou les galets presseurs et, ce qui est plus important, de surmonter l'inertie des bobines au démarrage et à l'arrêt de la bande, sans glissement de la bande par rapport au cabestan.

Cependant, si un système d'entraînement de bande doit être soumis à des conditions opératoires inhabituelles comme par exemple une humidité élevée, des températures élevées et basses et des périodes de fonctionnement à vide prolongées, les surfaces de la bande et/ou des galets tournants peuvent devenir glissantes et ne plus être en mesure d'entraîner la bande ou au contraire, des résidus collants peuvent se former sur la bande et/ou les galets, la bande devenant collante et se froissant, ce qui conduit à une détérioration de la bande et à un mauvais fonctionnement du système d'entraînement. Si la bande est glissante ou adhère au cabestan, au galet, à la tête d'enregistrement, à la bobine débitrice, etc., elle n'avance pas de façon satisfaisante. Ces deux types de problèmes conduisent à perturber le débit normal des données enregistrées sur la bande magnétique, et à interférer avec leur transfert, vers ou en provenance de la bande. Ces problèmes, qui se posent tous dans le cas des enregistreurs d'accident d'avion, s'aggravent lors de périodes de fonctionnement à vide prolongées. L'utilisation d'une force de ressort suffisante pour s'assurer que le galet presseur ne glisse pas sur la bande et pour tirer la bande en certains points collants, tend à déformer la surface élastique du galet si le système d'entraînement de la bande reste immobile pendant une période prolongée.

La présente invention a pour but de proposer un système d'entraînement de bande plus fiable. Afin d'empêcher un glissement du galet presseur par rapport au cabestan, l'invention fournit des premier et second engrenages respectivement coaxiaux au cabestan et au galet presseur et propres à entraîner ce galet lorsque le cabestan est mis en rotation. Ceci garantit que le cabestan et le galet presseur tournent ensemble même indépendamment de la présence de la bande.

L'emploi d'engrenages pour faire tourner le galet presseur élimine la nécessité d'utiliser une force suffisamment grande pour faire tourner le galet uniquement par frottement. La force nécessaire pour produire, selon l'invention, le frottement cabestan/bande nécessaire à l'avancement est moins élevée que celle qui était nécessaire dans l'art antérieur pour faire tourner le galet presseur. Ainsi on évite la déformation de la surface élastique de l'un des galets tournants lors des périodes de fonctionnement à vide, tout en assurant un meilleur contrôle de l'avancement de la bande que dans les systèmes à pression élevée classiques.

En outre, la surface du cabestan en contact avec la bande est faite d'un matériau non déformable, tel que l'acier inoxydable, et les dents des engrenages n'engrènent que partiellement lorsqu'est appliquée une force juste suffisante pour rapprocher les surfaces du cabestan et du galet presseur jusqu'à ce qu'elles entrent en contact avec la bande. On permet ainsi à la surface deformable du galet presseur de presser uniformément, mais avec une force inférieure à la force conventionnelle, contre la bande et le cabestan.

Si le cabestan commence à tourner par rapport au galet presseur, les dents de l'engrenage s'enclenchent, le galet tourne avec le cabestan et la bande est entraînée sur ses deux faces, au lieu d'être ralentie sur l'une d'entre elles. La disposition d'un deuxième galet presseur, du côté opposé au premier, améliore le contact de la bande avec la tête magnétique et facilite l'entraînement de la bande dans les deux sens. Si deux galets presseurs sont employés, ils peuvent être sollicités vers le cabestan par un ressort commun, ce qui a l'avantage d'assurer une force égale sur les deux galets.

Un mode particulier de réalisation de l'invention sera décrit ci-après, à titre indicatif et nullement limitatif, en référence au dessin annexé sur lequel :

- La figure 1 est une vue en perspective d'un système intégré d'entraînement de bande selon l'invention, et

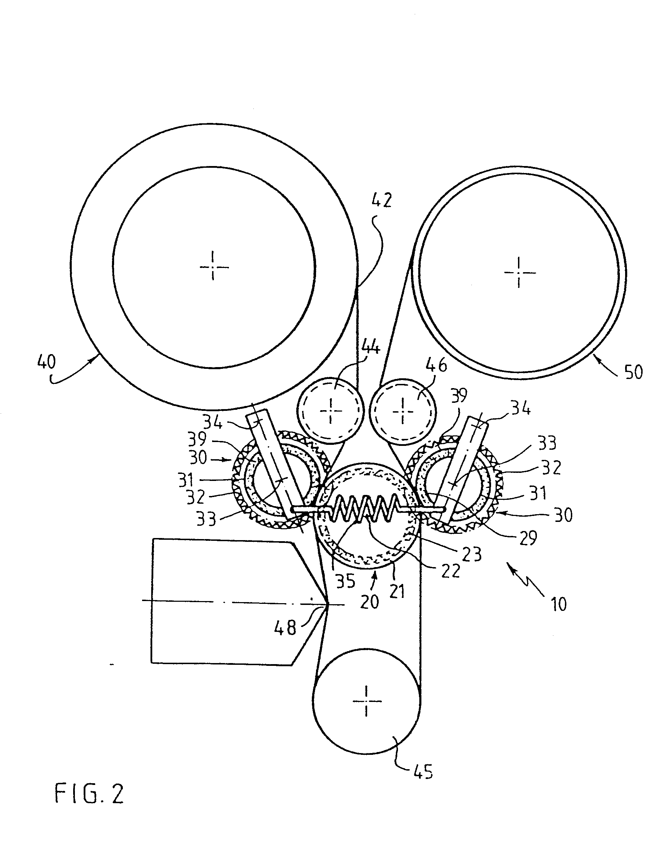

- La figure 2 est une vue en plan du système de la figure 1.

Dans ces figures, la présente invention est illustrée par un système d'entraînement de bande 10 comportant un cabestan 20 et un ou plusieurs galets presseurs 30, destinés à être utilisés dans un système d'entraînement de bande comportant également une bobine débitrice 40, une longueur de bande 42, des guides fixes 44, 45 et 46, un ou plusieurs capteurs magnétiques 48, et une bobine réceptrice 50. Le cylindre 21 du cabestan et les cylindres de galets presseurs 31 sont désignés par le terme générique de "galet". Le cabestan est réalisé en un matériau non déformable tel que l'acier inoxydable

Le cabestan 20 est de préférence monté sur un axe fixe 22 et peut classiquement être entraîné par un moteur 24 à une vitesse constante pour réguler le passage de la bande 42 dans le système d'entraînement. La bobine réceptrice 50, et généralement aussi la bobine débitrice 40, sont également entraînées par des moyens appropriés bien connus dans la technique.

Le frottement produit par le cabestan 21 constitue la principale force d'entraînement appliquée à la bande 42. Le frottement résulte de la force exercée par le galet presseur 31 tournant sur un axe 33, lui-même monté de façon à pivoter autour d'un autre axe 34, et est appuyé par un ressort 35 contre le cabestan 21. Bien qu'un seul galet presseur 31 en aval du capteur 48 suffise dans certaines applications, deux galets presseurs, un de chaque côté de la tête magnétique 48, sont préférables lorsqu'on souhaite commander avec précision le mouvement de la bande ou son défilement dans les deux sens. Deux ensembles de galets presseurs 30 peuvent avantageusement être montés sur des côtés pratiquement opposés du cabestan 20 et être appliqués l'un contre l'autre par un seul ressort 35, assurant ainsi une vitesse de bande égale des deux côtés du capteur 48.

Un galet tournant sur au moins un des côtés de chaque point d'entraînement de la bande 29 c'est-à-dire le cabestan ou le ou les galets presseurs présente une surface élastiquement déformable permettant d'appliquer uniformément la force du ressort 35 sur la bande 42 et améliorant le coefficient de frottement. Dans le mode de réalisation préféré, les surfaces déformables sont des manchons de caoutchouc 39 entourant chacun des galets presseurs 31. La bande 42 est guidée entre les bobines à rayon variable 40 et 50 par un guide fixe 44 pour atteindre le point de contact 29 entre le cabestan et le galet presseur, autour d'un guide fixe formant une boucle 45 et en sortie, par un guide fixe 46.

Pour éviter tout glissement entre le cabestan 21, la bande 42 et le galet 31, la présente invention associe au cabestan et aux galets presseurs des engrenages 23 et 32, tous deux coaxiaux aux axes respectifs 21 et 31 de ces galets. La somme du rayon intérieur (jusqu'aux encoches séparant les dents) d'un engrenage et du rayon extérieur (jusqu'aux sommets des dents) de l'autre engrenage est inférieure à la somme des rayons des surfaces cylindriques (en contact avec la bande) des galets respectifs. Par conséquent, les engrenages 23 et 32 ne s'engrènent que partiellement et ne transmettent normalement pas la force de rotation du cabestan 21. Cependant, si l'un ou l'autre des galets commence à glisser par rapport à l'autre, les dents des engrenages 23 et 32 s'enclenchent immédiatement et font tourner le galet presseur 31. Par conséquent, le couplage entre le cabestan et les galets est porté à un niveau sensiblement supérieur à celui des divers couplages résistants mentionnés ci-dessus. Lorsqu'on diminue la force du ressort, on diminue la tendance qu'a la surface du galet presseur à se déformer au-delà de sa limite d'élasticité lors des périodes où elle est immobile et à perdre définitivement sa forme cylindrique.

Il va de soi que de nombreuses modifications peuvent être apportées au dispositif décrit et représenté sans pour autant sortir du cadre de l'invention.

REVENDICATIONS

1. Dispositif d'entraînement de bande magnétique du type comportant un cabestan entraîné par un moteur et un galet presseur monté à rotation autour d'un premier axe appuyé contre le cabestan de façon à tourner avec le cabestan et à faire défiler une bande passant entre le cabestan et le galet, caractérisé en ce qu'il comprend des premier et second engrenages respectivement coaxiaux au cabestan et au galet et propres à entraîner le galet lorsque le cabestan est mis en rotation, en ce que le galet a une surface déformable élastiquement en contact avec la bande, en ce que ce galet est monté à rotation autour d'un deuxième axe parallèle au premier axe et distant de ce dernier, en ce que la surface du cabestan en contact avec la bande est essentiellement non déformable, et en ce que les engrenages ont des dents qui ne s'engagent les unes dans les autres que partiellement lorsqu'est appliquée une force juste suffisante pour que les surfaces du galet et du cabestan s'approchent l'une de l'autre pour entrer en contact avec une bande, mais pas suffisante pour déformer la surface du galet au-delà de sa limite d'élasticité.

2. Dispositif selon la revendication 1, caractérisé en ce qu'il comporte en outre un second galet semblable au premier et disposé symétriquement au premier galet par rapport au cabestan.

3. Dispositif selon la revendication 2, caractérisé en ce qu'il comprend un ressort commun appuyant les galets contre le cabestan.

0174218

FIG.1

FIG. 2

## EUROPEAN SEARCH REPORT

European Patent
Office

**0174218**
Application number

EP 85 40 1387

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-2 995 287 (L. NAMENYI-KATZ) <br> * Colonne 1, lignes 49-58; colonne 2, ligne 34 - colonne 3, ligne 24; figures * | 1 | G 11 B 15/29 |
| | --- | | |
| A | US-A-3 002 670 (L. NAMENYI-KATZ) <br> * Colonne 3, lignes 5-15; figures * | 1 | |
| | --- | | |
| Y | GB-A-1 077 313 (INTERNATIONAL STANDARD ELECTRIC) <br> * Page 1, ligne 63 - page 2, ligne 45; figures * | 1,2 | |
| | --- | | |
| Y | US-A-3 253 758 (S. HORIUCHI) <br> * Colonne 2, ligne 49 - colonne 3, ligne 28; figures * | 1,2 | **TECHNICAL FIELDS SEARCHED (Int Cl 4)** |
| | --- | | |
| A | DE-A-2 738 226 (SIEMENS) <br> * Page 7, lignes 10-26; figure * | 1,2 | G 11 B |
| | --- | | |
| A | FR-A-1 261 275 (M. PESTEL) <br> * Page 2, colonne de gauche; figures * | 1-3 | |
| | --- | | |
| A | DE-A-2 439 180 (BRAUN) | | |
| | ---     -/- | | |

The present search report has been drawn up for all claims

| Place of search | Date of completion of the search | Examiner |
|---|---|---|
| THE HAGUE | 15-11-1985 | DECLAT M.G. |

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl.4) |
|---|---|---|---|
| A | US-A-3 123 811 (J.S. MUTZIGER) | | |
| A | US-A-3 219 246 (N. KIHARA) | | |
| | ----- | | |
| | | | **TECHNICAL FIELDS SEARCHED (Int. Cl.4)** |

The present search report has been drawn up for all claims

| Place of search THE HAGUE | Date of completion of the search 15-11-1985 | Examiner DECLAT M.G. |
|---|---|---|

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document